# EUROPÄISCHE PATENTSCHRIFT

(11) **EP 0 608 916 B1**
(45) Veröffentlichungstag und Bekanntmachung des Hinweises auf die Patenterteilung: **05.11.1997**
(21) Anmeldenummer: 94103521.4
(22) Anmeldetag: 04.07.1990
(51) Int. Cl.: H02K 5/15, H02K 23/66, H02K 5/173, H02K 9/06, H02K 11/00, H02K 5/00

(54) **Elektrischer Universalmotor**
Universal electric motor
Moteur électrique universel

(30) Priorität: 15.07.1989 DE 3923421
(43) Veröffentlichungstag der Anmeldung: 03.08.1994
(62) Teilanmeldung aus: 90112749.8
(73) Patentinhaber: Kress-elektrik GmbH + Co. Elektromotorenfabrik, D-72406 Bisingen (DE)
(72) Erfinder: Kress, Willy, D-72406 Bisingen (DE); Binder,Alfred, D-72406 Bisingen (DE)
(74) Vertreter: Otte, Peter, Dipl.-Ing.

(56) Entgegenhaltungen:
- EP-A- 0 208 137
- EP-A- 0 329 249
- DE-U- 8 520 258
- GB-A- 2 167 909
- US-A- 3 440 465

## Beschreibung

Die Erfindung geht aus von einem elektrischen Universalmotor nach dem Oberbegriff des Anspruchs 1.

Bei einem eine Drehrichtungsumkehr ermöglichenden elektrischen Universalmotor dieser Art (US-PS 34 40 465) ist ein gleichzeitig die Kohlebürsten tragender, um vorgegebene Winkelbeträge verschwenkbarer Schaltring so zwischen zwei stationären Ring- bzw. Lagerteilen eingeklemmt gehalten, daß von einem dem Stator des Elektromotors zugewandten Kontaktring als erstem dieser Lagerteile auf den Schaltring gerichtete bogenförmige Blattfederkontakte in den jeweiligen Endlagen des Schaltrings unmittelbar in Kontaktanlage mit entsprechenden Kontaktbereichen der Bürstenhalter gelangen. Hierdurch ist gewährleistet, daß bei einer entsprechenden Verdrehung des die Kohlebürsten tragenden Schaltrings sowohl deren Winkellage zum Kommutator des elektrischen Motors zur Erzielung einer besseren Kommutierung in den jeweiligen Schaltringendlagen als auch die notwendige Polumschaltung des über die Bürsten dem Rotor zugeführten Stroms gewährleistet ist, allerdings mit dem Nachteil, daß durch die direkte Bürstenkontaktierung der Bereich Kohlebürste/Kohlehalter leicht eine unzulässig hohe Erwärmung annehmen kann - darüber hinaus ist der Aufbau und die Lagerung für die Polumschaltung und die Bürstenverstellung umständlich und weist eine hohe Anzahl von komplizierten Einzelteilen auf.

Lagerschilde sind bei diesem dem Antrieb eines Elektrohandwerkzeugs dienenden Elektromotor insofern nicht vorgesehen, als Teile des Werkzeuggehäuses gleichzeitig Lagerschildaufgaben für den Motor wahrnehmen und das über Schrauben zusammengespannte Statorpaket mit seinem äußeren rohrförmigen Gehäuse gleichzeitig den mittleren Teil der Werkzeuggehäuseaußenform bildet. Die Lagerungen für die Rotorwelle sind von stationären Halteteilen des Werkzeuggehäuses abgeleitet.

Bei einem anderen Elektrohandwerkzeug mit einem Universalmotor für Rechts- und Linkslauf ist es bekannt (DE-PS 37 31 079), zur Umschaltung an einem die Bürsten gleichzeitig lagernden Trägerring zwei in Umfangsrichtung angeordnete, jeweils mit einem Bürstenhalter elektrisch verbundene und radial nach innen federnde Kontaktfedern anzuordnen, die an ihren jeweils zueinander benachbarten, jedoch voneinander getrennten Enden jeweils einen Netzkontakt- bzw. einen Feldkontaktpunkt aufweisen. Der erforderliche Kontaktdruck für eine sichere in radialer Richtung wirkende Kontaktgabe wird daher lediglich durch die radiale Druckwirkung der Vorspannungsfedern erzeugt, die innerhalb des vom Trägerring gebildeten Axialraums angeordnet sind, der auch die Kohlebürsten enthält, so daß bei möglicherweise nicht hinreichender Staubabdeckung Verschmutzungen und Kontaktschwierigkeiten problematisch werden können. Der Trägerring ist auf einem zentralen Axialvorsprung des zugewandten Motorgehäuses drehbar aufgesetzt und wird von einem am Ende des Vorsprungs angeordneten Sicherungsring gehalten und in seiner axialen Position fixiert.

Bei diesem bekannten Elektrohandwerkzeug ist das Motorgehäuse gleichzeitig Teil des Werkzeug-Außengehäuses, wobei bei Wegfall von beidseitigen Lagerschilden die Rotorwellenlager von Gehäusestrukturen des Handwerkzeugs selbst gebildet sind - genaueres ist nicht angegeben.

Die Verdrehung des Trägerrings mit seinen Kohlebürsten erfolgt dadurch, daß diametral entgegengesetzte seitlich vorspringende Ansätze durch Gehäuseschlitze des Elektrohandwerkzeugs ragen und auf diese Weise eine Betätigung von außen möglich ist. Die Einnahme einer Neutralstellung des Trägerrings zur gleichzeitigen Abschaltung des Motors ist durch eine mechanische Verriegelung ausgeschlossen; die Stromzuführung ist über einen gesonderten Schalter nur dann möglich, wenn sich der Trägerring selbst in einer seiner beiden Drehendlagen befindet.

Die Stromzuführung erfolgt über den Sicherungsring, der eine erste axial bis zum Trägerring geführte Netzkontaktzunge aufweist, die einen der Netzkontaktpunkte der innenliegenden peripheren Kontaktfedern gleichzeitig mit einer vom Statorpaket axial auf den Trägerring gerichteten Feldkontaktzunge kontaktiert, wobei durch die Verdrehbarkeit des Trägerrings in der anderen Endlage dann jeweils die anderen Netz- bzw. Feldkontaktpunkte der Kontaktfedern von der Netz- bzw. Feldkontaktzunge des Sicherungsrings bzw. Stators kontaktiert werden. Der andere Netzanschluß ist unmittelbar mit dem freien Statoranschluß verbunden. Die Polumkehr des Rotorstroms über die Bürsten erfolgt dadurch, daß diese jeweils mit einer der Kontaktfedern am Trägerring elektrisch verbunden sind. Eine Einbeziehung von Stirnflächen hier des B-Lagerschilds in den Umschaltvorgang zur Reversierung des Elektromotors ist schon deshalb nicht möglich, weil A- und B-Lagerschilde in diesem Sinne nicht vorhanden sind; daher stellt der bekannte Elektromotor außerhalb des zugeordneten Elektrohandwerkzeugs auch keine in sich abgeschlossene funktionsfähige und daher auch vor Einbau prüffähige Einheit dar.

Zur Ermöglichung einer Umschaltung zwischen Rechts- und Linkslauf bei einer Handwerkzeugmaschine ist es ferner bekannt (EP-PS 02 08 137), die Einrichtung zum Verschieben der auf dem Kollektor schleifenden Bürsten als Umschalter in Form von zwei miteinander kuppelbaren Trägerkörpern aus Isoliermaterial auszubilden, wobei die beiden Trägerkörper ineinandergreifende Bünde aufweisen, die einen Hohlraum bilden, in dem die Umschalt-Kontaktelemente angeordnet sind. Bei dieser bekannten Handwerkzeugmaschine ist auch eine weitgehend automatische Montage möglich, da die beiden Trägerkörper in Form eines Kontakthalters für die Kontakte zum Außenanschluß der Werkzeugmaschine bzw. als Kontaktplatte mit den Kohlebürstenhaltern ausgebildet sind und die Kontaktierung mit den Statoranschlüssen durch axiale Kontaktfahnen erfolgt. Zur Ermöglichung der Umschaltvorgänge für den Drehrichtungswechsel sind radial federnde Kontaktbänder in Haltetaschen der Kontaktplatte eingesetzt, wobei die Kontaktgabe ebenfalls, wie schon bei dem Elektrohandwerkzeug der eingangs berücksichtigten DE-OS 37 31 079, in radialer Richtung stattfindet.

Es ist ferner bekannt (US-PS 46 13 781), bei einem elektrischen Motor auf einer Seite eine Endkappen-Montagegruppe anzuordnen, die ein Kunststoffteil umfaßt, in dessen Innerem eine Vielzahl streifenförmiger metallischer Leitungen eingebettet sind, die die elektrischen Verbindungen herstellen zwischen den Motorkomponenten und den Bürstenhaltern. Zu diesem Zweck ist jede elektrische Leitung, die mit einem Bürstenhalter Kontakt machen soll, um einen Basisbereich des Bürstenhalters herumgewickelt, wozu jeder Bürstenhalter an seiner Basis seitliche Flansche aufweist.

Ferner ist die Ausbildung des einzelnen Bürstenhalters so getroffen, daß eine Seitenwand schleifenartig abgebogen und so verlängert ist, daß sie nach Art eines Hakens unter die jeweilige Kohlebürste im Bürstenhalter greift und diese zu Montagezwecken im Abstand zum Kollektorring des Ankers zunächst halten kann. Anschließend, nämlich nach dem Zusammenbau, wird der Haken weiter nach außen gedrückt, wodurch die Kohle freikommt und die elektrische Kontaktgabe zwischen ihr und dem Kollektor des Elektromotors möglich ist.

Es ist ferner bei einer Baugruppe für einen Elektromotor bekannt (DE-GM 85 20 258), eine aus Isoliermaterial bestehende und eine Schaltungsanordnung tragende Platte mit zentralem Ausschnitt zur Aufnahme des Kollektors eines Elektromotors vorzusehen und auf der Platte einander gegenüberliegend angeordnete einstückige Rahmenteile zur Halterung von mit der Schaltungsanordnung verbindbaren Bürsten so auszubilden, daß von seitlich neben den Rahmenteilen angeordneten Federhalterungen federnd vorgespannte Fortsätze der Federn in die Rahmenteile führen. Die Federn sind auf den Federhalterungen schraubenförmig aufgewickelt. Mindestens ein Teil der elektrischen Schaltungsanordnungen ist in die Kunststoffträgerplatte eingebettet.

Dieses Einbetten der zum Betrieb eines Elektromotors erforderlichen Verdrahtung mindestens in ihren wesentlichen Bestandteilen ist auch bekannt aus der DE-OS 36 04 675, wobei ein isolierendes Bauteil die Leiterbahn in ihren wesentlichen Bestandteilen umschließt und gleichzeitig andere Bauelemente zum Betrieb des Motors lagert, beispielsweise Bürstenbrücken, die in das Bauteil ebenfalls integriert sind. Das Bauteil ist plattenförmig ausgebildet und weist eine zentrale Bohrung auf zur Ermöglichung des Durchtritts des Kollektors des Elektromotors.

Bei einem weiteren Elektromotor bekannter Bauart (Europäische Patentanmeldung 02 35 443) sind auf einer ringförmigen Trägerplatte eine Vielzahl von elektrischen Komponenten angeordnet, die mit in der Trägerplatte eingebetteten elektrischen Leitungen dadurch kontaktieren, daß die Trägerplatte die elektrischen Leitungen zur Kontaktgabe teilweise freigibt. Auf der Trägerplatte gleichfalls gelagerte Bürstenhalter verfügen dabei über randseitige Verlängerungen, die nach Art einer Verrastung über freie Leiterbereiche geklipst werden, so daß sich eine sichere körperliche Verbindung zwischen den Leitungen innerhalb der Trägerplatte und den Bürstenträgergehäusen herstellen läßt. Allein der Montageaufwand, um auf der Trägerplatte die Vielzahl von Einzelteilen einschließlich separater, gewickelter Bürstenvorspannungsfedern und deren Trägerpfosten anzuordnen und zu lagern, ist erheblich; Teile der elektrischen in die Trägerplatte eingebetteten Leitungen stehen dabei in axialer Richtung von dieser ab, um an anderer Stelle, beispielsweise mit dem Stator eine Kontaktgabe zu erreichen.

Es ist auch bekannt, bei einem Elektromotor für ein kleineres Elektrowerkzeug eine becherförmige Lagerbrücke so auszubilden, daß sie nach Art eines Teilgehäuses den in sie eingeschobenen Stator aufnimmt, in dessen Innerem wiederum der Rotor frei drehbar gelagert ist. Die Rotorwelle sitzt dabei auf der Seite der becherförmigen Lagerbrücke in einem Wälzlager, welches von der Lagerbrücke gebildet ist.

Ferner verfügt die Lagerbrücke über Mittel zur Ein- und Ausschaltung, Feldstecker sowie einen Entstörkondensator. An der Lagerbrücke ist ein Kontaktgitter angeordnet, welches als Stanzgitter zum wahlweisen Anschließen von Drosseln, Umschaltern, Dioden und Widerständen ausgeführt ist. Das Stanzgitter liegt auf der dem Rotor zugewandten Seite einer Schalteranordnung. Hierbei ist ferner ein Schaltring vorgesehen, bei dessen Verdrehen verschiedene Kontaktgaben erfolgen können, beispielsweise zur Drehrichtungsumkehr oder Geschwindigkeitsreduzierung (Europäische Patentanmeldung 02 24 054).

In diesem Zusammenhang ist es auch bekannt (Europäische Patentanmeldung 02 24 053), das ebene Stanzgitter auf einer Seite einer Kohlehalterplatte anzuordnen, wobei die Kohlebürsten auf der anderen Seite der Kohlehalterplatte befindlich sind. Durch senkrecht zur Hauptebene des Stanzgitters abgewinkelte Anschlußzungen ergeben sich Anschlußkontakte für die Feldwicklungen. Das Stanzgitter ist dabei als zusammenhängender Bandleiter aus Metall ausgebildet und mit der rotorseitigen Fläche der aus Kunststoff bestehenden Kohlehalterplatte verschweißt, verklebt oder auf sonstige Weise verbunden.

Problematisch bei den bekannten Elektromotoren bzw. Bauteilen für diesen ist, daß zwar durch gewisse Einzelmerkmale vereinfachende Lösungen erreicht werden, dennoch hinsichtlich des Aufwands an Einzelteilen, deren Zusammenfügen und der Montage des Elektromotors wesentlich zu komplexe Strukturen vorliegen, insbesondere wenn man bedenkt, daß ein solcher Elektromotor auch Mittel aufweisen sollte, um ein Ein- und Ausschalten, vor allen Dingen aber auch ein Umschalten in der Drehrichtung zu ermöglichen. Gerade die Drehrichtungsumkehr ist aber mit einem erheblichen Schaltungsaufwand üblicherweise verbunden, so daß hier, aber auch bei der Lagerung der Bürsten und deren guter Kontaktgabe zu weiteren Schaltungsteilen, überhaupt in der ganzen Grundstruktur und dem Aufbau von Elektromotoren Probleme auftauchen, die z.B. auch einer im wesentlichen automatisierten Montage und einer kostengünstigen Herstellung von Elektromotoren im Wege stehen.

Der Erfindung liegt daher die Aufgabe zugrunde, einen elektrischen Universalmotor zu schaffen, der bei besonders einfachem Aufbau mit nur wenigen Einzelteilen auskommt und dennoch bei einwandfreier Funktionssicherheit eine problemlose Drehrichtungsumschaltung, gegebenenfalls mit Motor-Ausschaltposition in einer Mittenschaltstellung, bei besonders einfacher elektrischer Verschaltung zur Polumkehr des Rotorstroms bietet.

### Vorteile der Erfindung

Die Erfindung löst diese Aufgabe mit den Merkmalen des Anspruchs 1 und hat den Vorteil, daß durch die Einbeziehung der Außenstirnfläche eines der Lagerschilde als Kontaktträger für den Reversiermechanismus eine erhebliche Vereinfachung in dessen Aufbau erzielt wird, wobei ein von diesem Lagerschild ausgehender das zugeordnete Rotorwellenlager aufnehmender Ansatz durch eine zentrale Öffnung des Schaltrings geführt ist und dessen unmittelbares Aufliegen auf der Stirnring-Außenfläche des Lagerschildes ermöglicht, wobei der Trägerring dann gleichzeitig den zugeordneten Gegenkontaktbereich für die Stirnring-Außenfläche bildet.

Durch das unmittelbare Aufliegen des Trägerrings auf der Stirnaußenfläche des Lagerschildes wird für die Umschaltung kein axialer Freiraum benötigt; die axiale Kontaktierung der aufeinanderliegenden Kontaktflächen wird durch einfache Federkontakte gewährleistet, die gleichzeitig einen sicheren Toleranzausgleich gewährleisten. Dabei liegen die Kontakte im durch den Gesamtaufbau des Elektromotors gewährleisteten Kühlluftstrom, in welchem auch die Kohlebürsten angeordnet sind, so daß sowohl im Bürstenbereich als auch im Kontaktbereich für die Reversierung hohe Temperaturen sicher vermieden sind.

Gerade durch die Einbettung der Kontaktbahnen in die Lagerschild-Stirnfläche ergibt sich eine besondere Einfachheit, wobei ein den auf die Stirnfläche unmittelbar aufgesetzten Schaltring übergreifender Sicherheitsring diesen nicht nur bei Aufrechterhaltung des axialen Kontaktfederdrucks an seiner Position sichert, sondern gleichzeitig auch für eine einwandfreie Staubabdichtung sorgt.

Die Erfindung ermöglicht daher durch diese spezielle Lagerschildausbildung sowohl eine exakte Zentrizität von Rotor und Stator zueinander infolge der Kugellageraufnahme über den Lagerschildansatz und trägt darüber hinaus gleichzeitig in besonders wirkungsvoller Weise zur elektrischen Verschaltung einschließlich Motorreversierung unter Einschluß einer Ein/Ausschaltfunktion bei.

Die axiale Kontaktierung macht eine automatisierbare Großserienfertigung problemlos möglich. Der komplette, keiner weiteren äußeren Lagerungen oder Verdrahtungen bedürftige Motor bildet nach Montage eine vollkommen abgeschlossene und funktionsfähige und insofern auch prüffähige Einheit und benötigt trotz hoher erreichter Stabilität, präziser Zentrierung des Motors, problemloser Reversierbarkeit mit Motorausschaltfunktion nur wenige Einzelteile.

Ein weiterer wesentlicher Vorteil besteht darin, daß die Kontaktbahnen für die Zuführung der Stromversorgung zum Stator und zur Sicherung der Umschaltmöglichkeiten für Rechts- und Linkslauf in das Material des bürstenseitigen Lagerschilds (B-Lagerschild) eingebettet bzw. an diesem so angeordnet sind, daß der die Kohlebürsten tragende Schaltring die Kontakte im Lagerschild, wie erwähnt, axial mit kräftigem Federdruck kontaktieren kann und daher selbst lediglich mit den Kohlebürsten verbundene, axiale Federdruckkontakte aufweist, die bei der Verdrehung des Schaltrings auf jeweils andere Kontakte im Lagerschild ausgerichtet sind zur Polwendung und gleichzeitig zur Bürstenverstellung zur Verbesserung der Kommutierung.

Eine Rastung in der Verdrehbarkeit des Schaltrings ergibt ferner eine mittlere Ein-Aus-Funktion für den Motor unabhängig von weiteren äußeren Schaltern, wobei für alle Baumuster stets die gleiche Verdrahtung im Bereich Schaltring und zugewandtem B-Lagerschild eingesetzt werden kann.

Durch die Drehung des Schaltrings zur Umschaltung zwischen Rechts- und Linkslauf ergibt sich gleichzeitig eine entsprechende Kontaktsäuberung, wobei die Kontakte innerhalb eines abgedichteten Raums angeordnet sind.

Durch die in den Unteransprüchen aufgeführten Maßnahmen sind vorteilhafte Weiterbildungen und Verbesserungen des elektrischen Universalmotors möglich. So können die vom B-Lagerschild getragenen Kontaktbrücken entweder in das B-Lagerschild sozusagen hochkant in Form von Stegen eingebettet sein, oder sie können als flaches Blechmaterial auf dieses aufgelegt und durch eine entsprechende Verrastung gesichert sein, entweder indem von den flachen Blechstegen abgewinkelte Schenkel in das Material des Lagerschildes eindringen, oder von diesem kurze Haltewarzen ausgehen, die von federnden Blechteilen beidseitig umfaßt werden, so daß sich beim Aufdrücken die Blechteile in der Endposition etwas in das Material dieser Haltezapfen oder -warzen eingraben und nicht mehr abgezogen werden können.

### Zeichnung

Ausführungsbeispiele der Erfindung sind in der Zeichnung dargestellt und werden in der nachfolgenden Beschreibung näher erläutert. Es zeigen:
- Fig. 1: eine mögliche Ausführungsform des erfindungsgemäßen elektrischen Universalmotors in der gebrauchsmäßigen Endmontageform im Längsschnitt und
- Fig. 2: den Universalmotor der Fig. 1 in einer Ansicht von rechts mit Draufsicht auf den durch einen zusätzlich aufgesetzten Sicherungsring erkennbaren Schaltring mit Kohlebürstenlagerung;
- Fig. 3: zeigt einen der Darstellung der Fig. 1 vergleichbaren Längsschnitt durch die Ausführungsform des elektrischen Universalmotors, jedoch in einer um 90° gegenüber der Fig. 1 gedrehten Ansicht, wobei die
- Fig. 4: im Längsschnitt das in den Darstellungen der Fig. 1 und 3 rechte, also B-Lagerschild zeigt;
- Fig. 5: einen Schnitt längs der Linie V-V der Fig. 1, jedoch mit Darstellung lediglich des A-Lagerschilds, während die
- Fig. 6: einen Querschnitt durch das A-Lagerschild mit eingesetztem und durch Verdrehung in seine gesicherte Endposition überführten Luftleit- und Zugankerrings darstellt;
- Fig. 7 und Fig. 8: zeigen zwei jeweils die Endpositionen des Schaltrings angebende Draufsichten auf diesen mit Darstellung der Kohlehalterungen, Drosselbecher und Kohlevorspannungsfedern,
- Fig. 9: den Schaltring von der dem B-Lagerschild zugewandten Rückseite zeigt und die
- Fig.10: einen Detailausschnitt längs der Schnittlinie X-X der Fig. 9 angibt;
- Fig.11: zeigt eine Draufsicht auf das B-Lagerschild entsprechend Fig. 4 von rechts, mit in dieses eingebetteten, dem nicht dargestellten Schaltring zugewandten Kontaktverläufen, während die
- Fig.12: einen Schnitt längs der Linie XII-XII der Fig. 11 zeigt;
- Fig.13: stellt eine Ansicht des B-Lagerschilds der Fig. 4 von links dar, aus welcher Ansicht auch die beiden mit der Statorwicklung zu verbindenden Netzanschlußkontakte sichtbar sind, während die
- Fig.14 und 15: schematisiert das elektrische Verdrahtungsbild des erfindungsgemäßen Universalmotors zeigen, mit dem Schaltring jeweils in der einen oder anderen Endanschlagposition und mit zwischen den Kohlebürsten und den Statoranschlußpunkten zwischengeschalteten Entstördrosseln; schließlich zeigt die
- Fig.16: zwei weitere Möglichkeiten der Anordnung bzw. Einbettung der Schaltkontaktverläufe im Bereich des B-Lagerschilds.

### Beschreibung der Ausführungsbeispiele

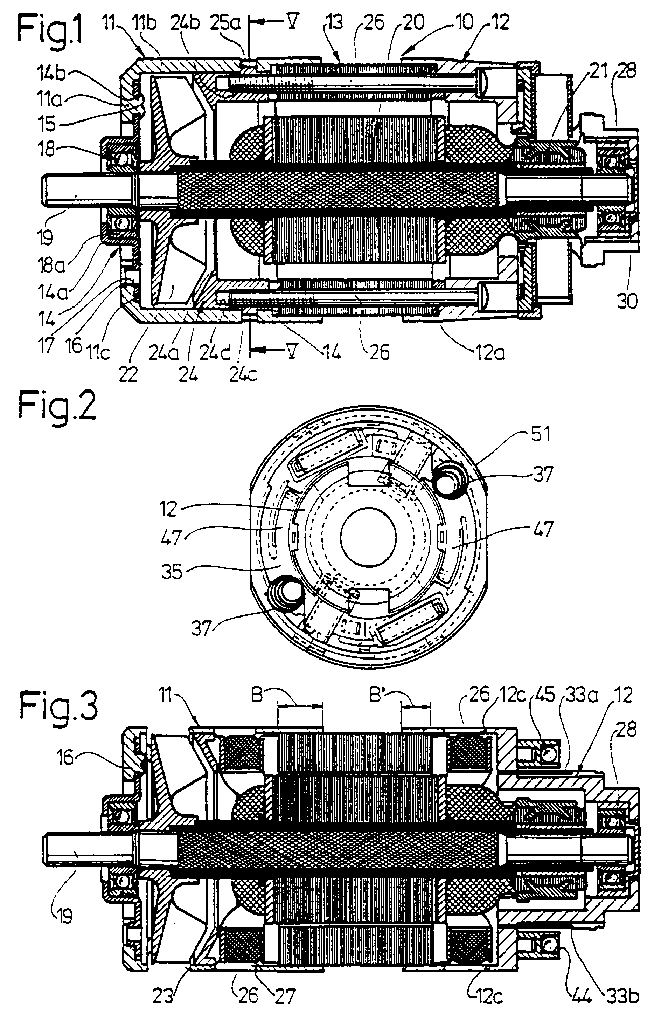

In Fig. 1 ist der elektrische Universalmotor mit 10, das linke, also antriebsseitige A-Lagerschild mit 11 und das rechte, bürstenseitige B-Lagerschild mit 12 bezeichnet.

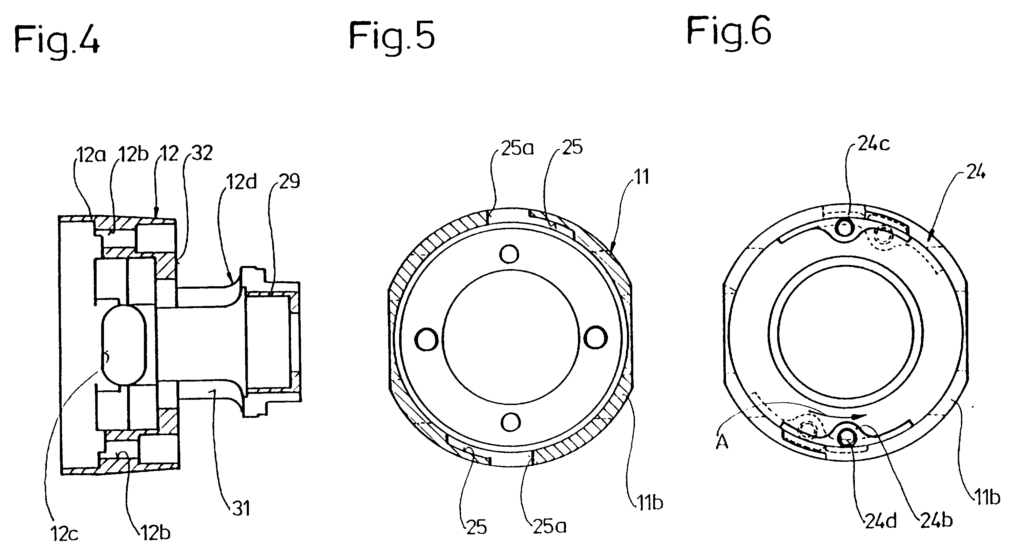

Das B-Lagerschild 12 ist in Fig. 4 nochmals gesondert dargestellt und umfaßt im einstückigen Aufbau zunächst eine zylindrische, topfartige Grundform 12a mit einer Einpaß-Randbildung, wobei am Außenrand auch Durchtrittsöffnungen 12b für Spannschrauben unter Bildung einer Abschulterung für die Anlage der Spannschraubenköpfe dargestellt sind. In diesem Bereich befinden sich ferner ovale Luftdurchtrittsöffnungen 12c angrenzend zu den Wickelköpfen 26 des Statorpakets; ähnliche Durchbrechungen in Höhe der Wickelköpfe befinden sich auch im Rand llb des A-Lagerschildes und sind dort mit 27 bezeichnet. Hierdurch ist sichergestellt, daß auch im Motorstillstand bei dann ebenfalls stillstehendem Lüfter 23 eine wirksame Kühlung erfolgt.

Der zylindrische Randbereich 12a des B-Lagerschilds geht in eine zentrale axiale Verlängerung über, die einen Ansatz 12d bildet mit einer Aufnahme 29 für das rechtsseitige Wälzlager 28 der Rotorwelle 19. Das Kugellager 28 kann, wie in Fig. 1 gezeigt, in der vom Ansatz 12d gebildeten Aufnahme 29 gegebenenfalls unter Zwischenlage einer metallischen, dann mehrfach abgetreppten Einlage 30 sitzen.

Für den Durchtritt der an einem Schaltring sitzenden Kohlebürsten weist der Ansatz 12d entsprechend großzügig bemessene Durchtrittsöffnungen 31 auf, die auch eine Drehbewegung der Kohlebürsten auf dem Kollektor zur Rechts-Linkslauf-Umschaltung ermöglichen.

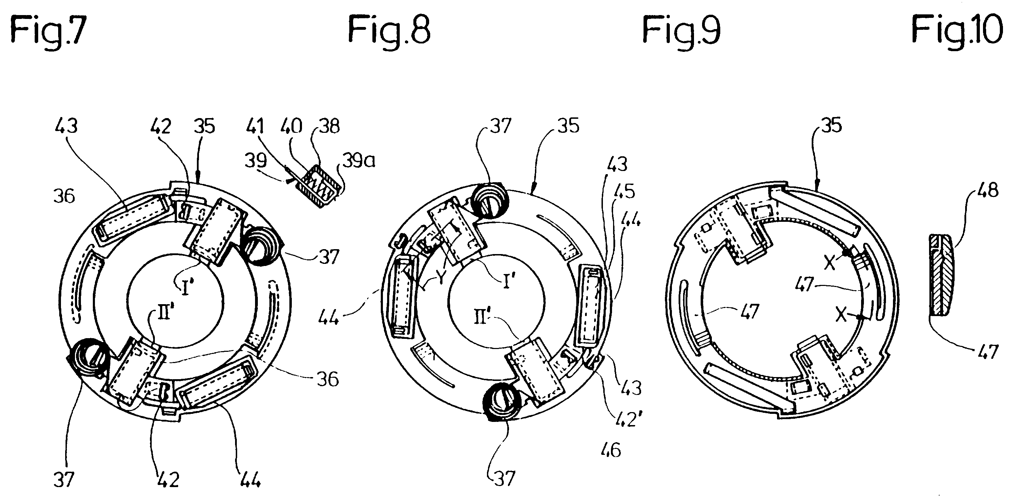

Das B-Lagerschild trägt und lagert als Gegenelement zu einem in den Fig. 7, 8 und 9 dargestellten Schaltring Kontaktbahnen, die flächig auf der Stirnfläche 32 des B-Lagerschilds (Fig. 4) im Übergang zum Ansatz 12d aufliegen bzw. in dieser Ebene flache Kontaktbereiche zur axialen Kontaktgabe bilden.

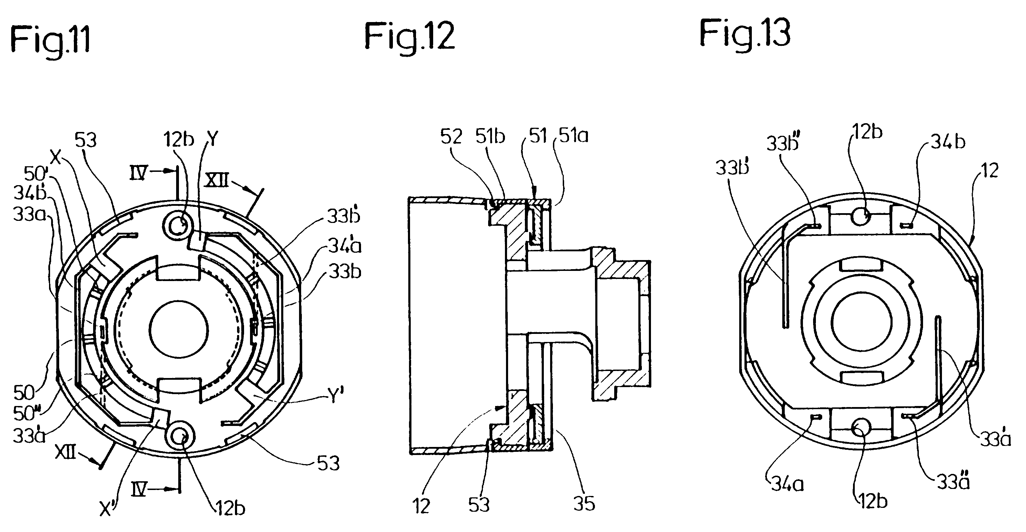

Das B-Lagerschild ist daher zusätzlich zu seinen sonstigen Aufgaben noch Hauptkontaktträger für die elektrische Anschaltung des Stators und zur Ermöglichung der Kohlebürstenkontaktierung, wobei die Kontaktbahnverläufe am besten aus der Darstellung der Fig. 11 in Verbindung mit der Fig. 13 hervorgehen.

Die Fig. 11 zeigt die nach außen gerichtete Ringfläche 32 des B-Lagerschildes 12, so daß hier auch die Durchtrittsbohrung 12b für die Spannschraubenbefestigung erkennbar ist. Die Netzzuführungs-Steckkontakte sind mit 33a, 33b bezeichnet; sie sind, wie auch Fig. 3 zeigt, durch das Material der Stirnfläche 32 hindurchgeführt bzw. verlaufen dann innerhalb dieses Materials als sekantenartige Längsstege 33a', 33b' und treten, wie die Fig. 13 zeigt, als axiale Steckkontakte 33c, 33a", 33b'' auf der dem Stator zugewandten Seite des B-Lagerschilds, die in Fig. 13 erkennbar ist, wieder hervor, wo dann die elektrische Verbindung über entsprechende axiale Steckkontakte mit den Statoranschlußklemmen erfolgt.

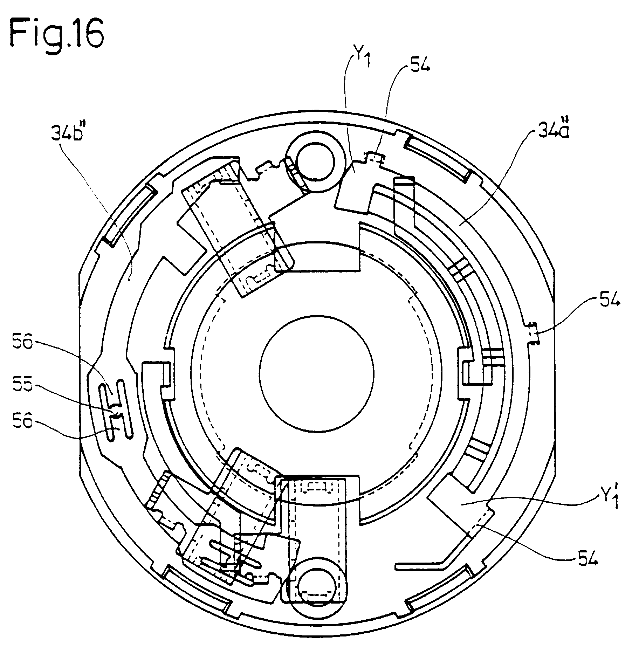

Zur Abnahme der vom Stator wegführenden Klemmen weist dann das B-Lagerschild zur Vervollständigung der entsprechenden axialen Steckkontaktanordnung im Viereck weitere Steckkontakte 34a, 34b auf, die dann ihrerseits in die in Fig. 11 erkennbaren beiden Kontaktbahnen 34b', 34a' übergehen. An sich ist der Kontaktbahnverlauf speziell der teilweise mehrfach abgebogenen Kontaktstegbahnen 34a', 34b' beliebig; bei dem in den Fig. 11 und 13 dargestellten Ausführungsbeispiele sind diese Kontaktbahnen, die flache Schienen sind, sozusagen hochkant in das Material der B-Lagerschildstirnfläche 32 eingebettet - hier sind allerdings auch andere Ausführungsformen möglich, wie im folgenden dann noch speziell mit Bezug auf die Darstellung der Fig. 16 erläutert wird.

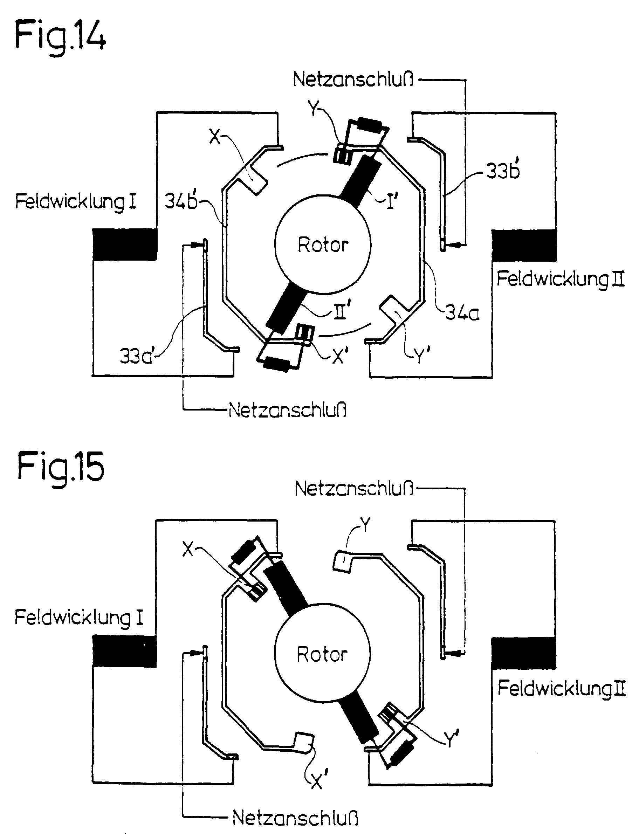

Man erkennt aber an dem bisher geschilderten Verlauf der Kontaktschienen oder -bahnen unter weiterer Bezugnahme auf die Darstellung in den Fig. 14 und 15, daß der Stromverlauf ganz allgemein so ist, wie in Fig. 14 gezeigt, also vom obenliegenden Netzanschluß zur Kontaktbahn 33b' und von dieser über einen axialen Steckkontakt auf die Feldwicklung II, von der Feldwicklung II zur ersten Umschalt-Kontaktschiene 34a'; von dieser Umschaltkontaktschiene über einen ihrer axialen Anschlußkontaktpunkte - hierauf wird noch eingegangen - auf die Kohlebürste I' und über den Rotor auf die Kohlebürste II', von dieser zur Umschaltkontaktschiene 34b' und über den von dieser gebildeten axialen Steckkontakt 24b zur Feldwicklung II zurück über die zweite Netzkontaktschiene 33a' zum in Fig. 14 gezeigten unteren Netzanschluß.

Man erkennt dann auch gleich im Vergleich zur Fig. 15, die die gleiche Darstellung der Fig. 14 lediglich mit verdrehtem Kohlebürsten-Schaltring zeigt, daß die über den Kollektor mit dem Rotor verbundenen Kohlebürsten die Rotoranschlüsse in den jeweiligen Umschalt-Verdrehendlagen mit Bezug auf die aufrechterhaltene Feldwicklungspolarisierung umpolen, mit einer entsprechenden Drehrichtungsänderung und gleichzeitig Umpositionierung der Kohlebürsten-Kontaktbereiche auf dem Kollektor, so daß sich in beiden Fällen eine gleich gute Kommutierung erzielen läßt und daher für beide Drehrichtungen ein ähnlicher Wirkungsgrad erzielt werden kann.

Wie daher soeben schon erläutert, bilden die Umschaltkontaktschienen 34a' und 34b', die in das Stirnflächenmaterial des B-Lagerschilds eingebettet oder auf diesen aufgelegt sind, jeweils zwei Kontaktpunkte oder Kontaktflächen aus, die in Fig. 11 jeweils mit X und X' bzw. Y und Y' bezeichnet sind.

Durch diese Ein- bzw. Anlagerung der Kontaktschienen oder Kontaktstege im bzw.am B-Lagerschild ergibt sich gleichzeitig eine wirkungsvolle Entlastung des Aufbaues des Schaltrings, der genauer in den Fig. 7, 8 und 9 dargestellt ist, wobei die Fig. 7 und 8 die gleiche Ansicht zeigen, jeweils in den beiden Endanschlägen des Schaltringes zur Umschaltung zwischen Rechtslauf und Linkslauf, während die Fig. 9 den Schaltring von der dann anderen Seite zeigt. Dieser Schaltring, der mit 35 bezeichnet ist, trägt dann lediglich noch die Köcher 36 für die Lagerung der Kohlebürsten I', II' mit den entsprechenden Vorspannungsfedern 37 für die Kohlebürsten und ist vorzugsweise aus einem geeigneten stabilen, isolierenden Material aufgebaut (Kunstoff, wie im übrigen auch Zugankerring 24, die beiden Lagerschilde, ein Sicherungsring für den Schaltring und gegebenenfalls der Lüfter 22).

Da entsprechend der Darstellung der Fig. 1 die Kontaktpunkte X, X'; Y, Y' für die elektrische Anschlußverbindung zu den Kohlen als in der Ebene der Stirnfläche 32 liegende axiale Flachkontakte ausgebildet sind, ist es erforderlich, daß auch der Schaltring auf der entsprechend zugewandten Seite entsprechende axiale Flachkontakte ausbildet, die dann in dieser Ebene insofern vollflächig axial auf den von den Umschaltkontaktstegen gebildeten Kontaktflächen aufliegen. Hierzu wird so vorgegangen, daß, auch zur Erzielung der erforderlichen Kontaktanpreß-Federkraft zur Kontaktierung auf der zum Rotor abgewandten Seite des Schaltrings 35 axiale Hohlvorsprünge angeordnet sind, die in Richtung auf die Stirnfläche 32 und die auf dieser lagernden Kontakte X, X', Y, Y' des B-Lagerschilds 12 offen sind - ein solcher Hohlvorsprung ist zwischen den beiden Fig. 7 und 8 oben im Schnitt dargestellt und mit 38 bezeichnet. Der dieser Schnittdarstellung entsprechende Schnitt ist in Fig. 8 mit y-y angegeben.

Innerhalb des Hohlvorsprungs ist ein U-förmig angebogener Kontaktbügel 39 unter der Vorspannung einer Feder 40 so gelagert, daß dessen Kontaktfläche 39a von der Feder 38 in Richtung auf die Kontaktflächen X, X', Y, Y' der Umschaltkontaktstege 34a', 34b' vorgespannt ist, wobei, wie aus Fig. 11 ersichtlich, diese axialen Kontaktflächen der Umschaltkontaktstege bei diesem Ausführungsbeispiel durch Abbiegungen der hochkant im Material des B-Lagerschilds eingebetteten Kontaktschienenverläufe gewonnen sind.

Der U-förmige Kontaktbügel 39 durchdringt an einer Stelle seiner Kontaktfläche 39a gegenüberliegend mit einer Kontaktzunge 41 den Hohlvorsprung 38, und auf diese Kontaktzunge wird dann die Kontaktklemme 42 aufgesetzt, die entsprechend Fig. 7 mit der jeweiligen Kohlebürste verbunden ist. Eine solche breitflächige axiale Kontaktierung sichert nicht nur eine einwandfreie Kontaktgabe, sondern auch eine ständige Reinigungswirkung auf die Kontaktflächen, da diese bis zum Erreichen der jeweiligen Kontaktendposition unter Druck aufeinander schleifen.

Die erfindungsgemäße Grundkonzeption im Aufbau und speziell im Bereich der Umschaltung und Kontaktgabe mittels des insofern nur gering belasteten Schaltrings 35 macht eine weitere vorteilhafte Ausgestaltung vorliegender Erfindung möglich, die darin besteht, daß ohne größere Probleme zur Aufnahme von in Reihe zwischen Feldwicklung und Kohlebürsten geschalteten Drosseln 43 Drosselbecher 44 auf dem Schaltring integriert mit aufgenommen werden können. Die Einbeziehung von Drosseln in den Motorstromkreislauf läßt sich dann durch einfaches Umstecken erreichen; ist beispielsweise in der Darstellung der Fig. 7 der jeweilige Kohlebürstenanschluß unmittelbar mit der Kontaktzunge 41 des federnden U-Bügelkontaktes verbunden, so ist es auch möglich, die von dem jeweiligen Kohlebürstenanschluß herrührende Kontaktklemme 42' (Fig. 8) mit einer gesonderten, angrenzend zur Kontaktzunge 41 angeordneten Kontaktzunge 43 zu verbinden, deren anderes Ende, wie in Fig. 8 gestrichelt bei 45 gezeigt, im Schaltring 35 unter und längs des Drosselbechers zu dessen anderem Anschluß geführt ist, so daß man dann unter Einschaltung der Drossel 45 deren anderen Anschluß mittels der üblichen Klemmverbindung 46 auf die Kontaktzunge 41 aufstecken kann.

Die jeweiligen Endlagen sowie eine zusätzliche Mittel-Nullposition für die Kontaktumschaltung zwischen Rechts- und Linkslauf können schließlich noch durch eine oder zwei, sich dann vorzugsweise diametral gegenüberliegende Materialzungen 47 des Schaltrings 35 rastend gestaltet werden; diese Materialzungen sind am inneren Umfang peripher längs Teilkreisen verlaufend ausgeschnitten und verfügen über einen auf die Stirnfläche 32 des B-Lagerschildes zugerichteten Vorsprung 48, wie in Fig. 10 gezeigt. Mit diesem nasenartigen Vorsprung 48 rasten sie in Ausnehmungen 50, 50', 50'', die längs entsprechender Teilkreise in der Stirnfläche 32 des B-Lagerschilds verlaufen, ein und positionieren somit die beiden Endlagen für die Umschaltung Rechts-Linkslauf sowie die Mittellage in der Rastung 50, in welcher der Motor dann gleichzeitig ausgeschaltet ist. Es ergibt sich hierdurch also die Möglichkeit der Ein-Ausschaltung des Motors gleichzeitig mit der Umschaltung zwischen Rechts- und Linkslauf.

Der Schaltring 35 wird mitsamt der soeben geschilderten Bestückung über den Ansatz 12d des B-Lagerschildes geschoben soweit, bis er mit seinen zugewandten, federnden Kontakten 39a auf der Stirnringfläche 32 des B-Lagerschildes aufliegt.

Zur Fixierung des Schaltrings ist schließlich noch ein Sicherungsring 51 (Fig. 12) vorgesehen, der vorzugsweise die Außenringkante des Schaltrings 35 durch einen nach innen vorspringenden Ringflansch 51a erfaßt und zur Durchführung der entsprechenden Drehbewegung festhält, wobei der Sicherungsring 51 selbst mit Hilfe von am besten gleichmäßig über den Umfang verteilten Axialvorsprüngen 51b, die an ihren Enden mit Arretiernasen 52 versehen sind, in entsprechende Rastausnehmungen 53 an der Außenwandung des B-Lagerschilds 12 eingreift.

Der Aufbau des Universalmotors vervollständigt sich hiermit, so daß für die aus einer Ebene heraus ermöglichte, automatische Fertigung insgesamt lediglich sieben Teilkomponenten erforderlich sind, nämlich das in der Zeichnung der Fig. 1 linke A-Lagerschild, die dessen Boden zugeordnete Stabilisierungsplatte, die dann eingesetzte Vormontageeinheit aus Rotorwelle, Rotor, Lüfter und den beiden Lagern, dem gleichzeitig den Zuganker bildenden Luftleitring, dem rechtsseitigen B-Lagerschild, dem auf dessen freie nach außen weisende und die entsprechenden Kontaktschienen und Stege tragenden Ringfläche aufgesetzte Schaltring und der diesen in seiner Teilverschwenkbarkeit auf dem B-Lagerschild haltenden Sicherungsring.

In entsprechenden Ausgestaltungen vorliegender Erfindung ist es schließlich noch möglich, anstelle der sozusagen hochkant in das Stirnflächenmaterial des B-Lagerschilds eingebetteten und durch Umbiegen die axialen Flachkontakte bildenden Kontaktschienen und Federn diese auch in der entsprechend schon vorgebogenen und ausgestanzten Ringform vollflächig, wie bei 34a" gezeigt, mit den beiden Endkontakten Y₁ und Y'₁ auf die Stirnfläche aufzulegen und durch abgebogene Stegbereiche, wie sie bei 54 erkennbar sind, sozusagen in das Stirnflächenmaterial des B-Lagerschildes einzustecken und so zu sichern.

Eine alternative Ausführungsform besteht schließlich noch darin, daß bei ebenfalls vollflächiger Auflage, wie bei 34b' erkennbar, die Fixierung einer solchen im Halbkreis verlaufenden Flachschiene auch ohne zusätzliche Abbiegungen erfolgen kann, indem man an bestimmten Stellen im Flachschienenmaterial Öffnungen 55 freiläßt, an die beidseitig federnde Stege 56 angrenzen. Bei dieser für sich gesehen bekannten Befestigungsmethode wird dann die Öffnung 55 von einem geringfügig im Durchmesser größeren, aus der Stirnringfläche des B-Lagerschilds hervorstehenden Zapfen durchsetzt, in dessen angrenzende Randbereiche sich dann die scharfkantigen vorderen Ränder der Federn 56 eingraben, so daß ein Abziehen eines solchermaßen befestigten Kontaktbandes dann ausgeschlossen ist. Es versteht sich, daß die Befestigung an geeigneten Stellen mehrfach erfolgt. Auch diese beiden Befestigungsarten sind neben der in der ersten Ausführungsform erläuterten Einbettung (gegebenenfalls durch Umspritzung) der Kontaktstege möglich, da diese Kontaktstege durch die axiale Kontaktgabe durch den aufgesetzten Schaltring sozusagen zusätzlich noch gehalten werden. Die Art der hier getroffenen Kontaktierung umfaßt also einen Federkontakt mit U-Bügel einschließlich Druckfeder bei ausdrücklich axialer Kontaktgabe und Kontaktierung in einer Ebene durch den von der Feder jeweils entwickelten Preßdruck.

Die die Kohlebürsten aufnehmenden Kohleführungen sowie die Drosselbecher können am Schaltring unmittelbar angespritzt werden, wobei die Zwischenschaltung der Drosseln problemlos durch Umstecken möglich ist und der zur Drossel führende Kontakt als Kontaktsteg unterhalb des Drosselbechers geführt ist, so daß auch hier mit geringstem Raumbedarf gearbeitet ist.

## Patentansprüche

1. Elektrischer Universalmotor für beliebige Antriebe, insbesondere Elektrohandwerkzeuge, Büromaschinen, Haushaltsgeräte, motorisch angetriebene Gartenwerkzeuge u.dgl., mit Stator und Statorwicklungen, drehbar gelagertem Anker (20) mit Kollektor (21), beidseitigen, gleichzeitig die Lagerung für den Anker (20) bildenden Lagerschilden sowie mit auf einem um vorgegebene Winkelbeträge relativ verdrehbaren Schaltring (35) angeordneten (Kohle)-Bürsten und ihren Halterungen, wobei in den Schwenkendlagen des Schaltringes die Feldwicklungen des Stators und die Ankerwicklung jeweils unterschiedlich gepolt sind zur Drehrichtungsumkehr, dadurch gekennzeichnet, daß der die (Kohle)-Bürsten (I', II') mit ihren Halterungen (36) lagernde Schaltring (35) auf eine äußere Stirnringfläche (32) des B-Lagerschildes aufgesteckt ist, welches den Schaltring mit einem die Lageraufnahme (29) für das Rotorwellenlager (28) bildenden Ansatz (12d) durchdringt, und daß die axial nach außen gerichtete, ringförmige Stirnfläche (32) des den Schaltring (35) tragenden Lagerschildes die zur Umschaltung zwischen Rechts- und Linkslauf und gegebenenfalls Ein-Ausschaltung erforderlichen Umschaltstege oder Umschaltschienen (34a', 34b', 34a", 34b") einschließlich von zu einer axialen Kontaktgabe geeigneten, sich in der Stirnringebene befindenden Kontaktflächen (X, X', Y, Y') lagert.

2. Elektrischer Universalmotor nach Anspruch 1, dadurch gekennzeichnet, daß auf die Stirnfläche (32) der Schaltring (35) mit ebenfalls axialen Kontaktflächen (39') zur elektrischen Weiterverbindung mit den Kohlebürstenanschlüssen unmittelbar aufgesetzt ist.

3. Elektrischer Universalmotor nach einem der Ansprüche 1 oder 2, dadurch gekennzeichnet, daß das B-Lagerschild (12) aus einer topfförmig/zylindrischen Ringform übergehend und sich gleichzeitig verjüngend den Ansatz für die Lageraufnahme (29) für das zweite Kugellager (28) der Rotorwelle (19) bildet und daß im Übergang zum verjüngten Ansatz die äußere Stirnfläche (32) im B-Lagerschild gebildet ist, durch welche Spannschrauben zur Verbindung der beiden Lagerschilde mit dem Statorpaket (13) geführt sind und in welcher die axialen, flächigen, von den zugeordneten, ebenfalls axialen Kontaktflächen (39a) des die Kohlebürsten tragenden Schaltrings (35) kontaktierten Umschaltkontakte (X, X', Y, Y') liegen.

4. Elektrischer Universalmotor nach einem der Ansprüche 1 bis 3, dadurch gekennzeichnet, daß in der Stirnfläche (32) des B-Lagerschilds angeordnet bzw. diese nach innen bis zu den Anschlüssen des Statorpakets durchdringend sowohl die weiterführenden Anschlüsse (33a', 33a"; 33b', 33b") für die Netzzuführung zu den Feldwicklungen (I, II) als auch Umschaltkontaktstege oder -schienen (34a', 34b'; 34a", 34b") eingebettet sind und daß die zugewandte Fläche des auf den Ansatz (12d) des B-Lagerschilds aufgeschobenen Schaltrings (35) lediglich die beiden in axialer Richtung federvorgespannten und mit den Bürsten verbundenen Kontaktanschlüsse lagert.

5. Elektrischer Universalmotor nach einem der Ansprüche 1 bis 4, dadurch gekennzeichnet, daß aus der Stirnfläche (32) des B-Lagerschilds über die Höhe des Schaltrings (35) hinaus Anschlußzungen (33a, 33b) geführt sind zur Verbindung mit den Netzanschlüssen, daß diese Anschlußzungen die Stirnfläche des B-Lagerschildes durchsetzen und, gegebenenfalls mit Längsstegen (33a', 33b') innerhalb des Stirnflächenmaterials des B-Lagerschildes geführt, in mit elektrischen Anschlußverbindungen des Stators zu verbindende axiale Steckkontakte (33a", 33b") münden und daß an der dem Stator zugewandten Seite der Stirnfläche des B-Lagerschilds weitere Steckkontakte (34a, 34b) vorgesehen sind, die ebenfalls das Stirnflächenmaterial durchsetzen und auf der dem Schaltring (35) zugewandten Seite, gegebenenfalls in Form der Umschaltkontaktschienen (34a', 34b'), mindestens die flächigen Axialkontakte (X, X'; Y, Y') für die Drehrichtungsumschaltung bilden.

6. Elektrischer Universalmotor nach Anspruch 4, dadurch gekennzeichnet, daß die Umschaltkontaktschienen als flache Kontaktstege (34a', 34b') hochkant in das Stirnflächenmaterial des B-Lagerschildes (12) eingesetzt sind und durch Abbiegungen die flachen Axialkontakte (X, X', Y, Y') bilden zur wahlweisen elektrischen Weiterverbindung mit den Bürsten (I', II').

7. Elektrischer Universalmotor nach Anspruch 4, dadurch gekennzeichnet, daß die Umschaltkontaktschienen (34a", 34b") flächig auf der Stirnfläche (32) des B-Lagerschilds (12) aufliegen und durch kurze Axialverlängerungen (54), die in das Material des Lagerschildes eindringen, gehalten sind (Fig. 16).

8. Elektrischer Universalmotor nach Anspruch 4, dadurch gekennzeichnet, daß die Umschaltkontaktschienen (34a", 34b") flächig auf der Stirnfläche (32) des B-Lagerschildes aufliegen und durch kleine, von der Stirnfläche (32) ausgehenden Materialzapfen gehalten sind, die beidseitig von federnden Spannteilen (56) der Kontaktschienen selbst erfaßt sind (Fig. 16).

9. Elektrischer Universalmotor nach einem der Ansprüche 1 bis 8, dadurch gekennzeichnet, daß der Schaltring (35) auf seiner zur Stirnfläche (32) des B-Lagerschilds abgewandten Seite die Kohlehalterungen (36) und gegebenenfalls Drosselbecher (44) zur Aufnahme von zwischen die Kohlebürsten und die Feldwicklungsanschlüsse geschalteten Entstördrosseln (45) einstückig ausbildet.

10. Elektrischer Universalmotor nach einem der Ansprüche 1 bis 9, dadurch gekennzeichnet, daß zur sicheren Axialkontaktgabe zwischen den Kontaktflächen (X, X', Y, Y') in der Stirnfläche (32) des B-Lagerschildes und den weiterführenden Verbindungskontakten zu den Ankerkohlen diese als federvorgespannte (U-Bügel)Kontakte (39) ausgebildet sind, die in axial vorspringenden Hohlvorsprüngen am Schaltring (35) so gelagert sind, daß ein flächiges Kontaktstück (39a) axial auf die in der Stirnfläche des B-Lagerschilds gebildeten Kontakte (X, X'; Y, Y') gepreßt ist und auf der anderen Seite axial nach außen eine Steckkontaktzunge (41) zur Verbindung mit den Kohlebürstenanschlüssen bzw. einem Entstördrosselanschluß gebildet ist.

11. Elektrischer Universalmotor nach einem der Ansprüche 1 bis 10, dadurch gekennzeichnet, daß angrenzend an den federnden U-Bügelkontakt (39) im Schaltring eine weitere Kontaktzunge (43) vorgesehen ist, die mit ihrer Verlängerung unterhalb des Drosselbechers (44) zum abgewandten Ende der Entstördrossel (45) geführt und dort angeschlossen ist derart, daß durch ledigliches Umstecken des Anschlusses von den Kohlebürsten entweder mit der weiteren Kontaktzunge (43) bzw. mit dem federnden U-Bügelkontakt (39) die Entstördrossel (45) in den Stromkreis eingeschaltet bzw. die Verbindung zwischen den Feldwicklungen und den Kohlebürsten unmittelbar hergestellt ist (Fig. 7, Fig. 8).

12. Elektrischer Universalmotor nach einem der Ansprüche 1 bis 11, dadurch gekennzeichnet, daß der Schaltring (35) im peripheren Verlauf federnde, ausgeschnittene Zungen (47) bildet mit einem nasenartigen auf die Stirnfläche des B-Lagerschildes gerichteten Vorsprung (48) und daß im B-Lagerschild in vorgegebenen Winkelabständen Rastausnehmungen (50, 50', 50") angeordnet sind derart, daß zusätzlich zu der die Ein-Ausschaltung des Elektromotors ermöglichenden Mitten-Nullposition des Schaltrings die beiden elektrischen Endlagenpositionen für Links- und Rechtslauf durch Rastung festgelegt sind.

13. Elektrischer Universalmotor nach einem der Ansprüche 1 bis 12, dadurch gekennzeichnet, daß zur Fixierung des Schaltrings (35) auf der zugewandten Stirnfläche (32) des B-Lagerschilds (12) ein den Schaltring (35) übergreifender Sicherungsring (51) vorgesehen ist.

14. Elektrischer Universalmotor nach Anspruch 13, dadurch gekennzeichnet, daß der Sicherungsring (51) mit einem nach innen vorspringenden Ringflansch (51a) die Außenringkante des Schaltrings (35) umfaßt und selbst mittels über den Umfang verteilten Axialvorsprüngen (51b) mit endseitigen Arretiernasen (52) in Rastausnehmungen (53) der Außenwandung des B-Lagerschilds (12) zur Verriegelung eingreift.

## Claims

1. A universal electric motor for any drive mechanisms, more particularly electric hand tools, office machines, household appliances, motor-driven garden tools and the like, comprising a stator and stator windings, a rotatably mounted armature (20) with collector (21), end shields at either end simultaneously forming the mounting for the armature (20), and also (carbon) brushes, arranged on a connector ring (35) which is relatively rotatable by predetermined angular amounts, and the mountings thereof, the field windings of the stator and the armature winding in each case being differently polarized in the swivel end positions of the connector ring to reverse the direction of rotation, characterised in that the connector ring (35) supporting the (carbon) brushes (I', II') with their mountings (36) is mounted on an outer annular end face (32) of the B-end shield, a projection (12d) of the said B-end shield penetrating the connector ring, the said projection (12d) forming the bearing seat (29) for the rotor shaft bearing (28), and in that the axially outwardly directed annular end face (32) of the end shield bearing the connector ring (35) supports the switch-over bars or switch-over rails (34a', 34b', 34a", 34b"), required for switching over between clockwise and anticlockwise rotation and optional on-off switching, including contact surfaces (X, X', Y, Y') which are suitable for making axial contact and are located in the plane of the end ring.

2. A universal electric motor according to claim 1, characterised in that the connector ring (35) with similarly axial contact surfaces (39') is mounted directly on the end face (32) for the further electrical connection to the carbon brush connections.

3. A universal electric motor according to one of claims 1 or 2, characterised in that the B-end shield (12), changing from a cup-shaped/cylindrical annular shape and simultaneously tapering, forms the projection for the bearing seat (29) for the second ball bearing (28) of the rotor shaft (19), and in that the exterior end face (32) is formed in the B-end shield as it changes to the tapered projection, tightening bolts being guided through the said end face to attach the two end shields to the stator plates (13) and the axial, flat switch-over contacts (X, X', Y, Y') contacted by the associated, similarly axial contact faces (39a) of the connector ring (35) bearing the carbon brushes being located in the said end face.

4. A universal electric motor according to one of claims 1 to 3, characterised in that both the connections (33a', 33a"; 33b', 33b") routed onwards for the power supply to the field windings (I, II) and switch-over contact bars or rails (34a', 34b'; 34a", 34b"), arranged in the end face (32) of the B-end shield or penetrating the said B-end shield inwardly as far as the connections of the stator plates, are embedded in the said end face, and in that the facing surface of the connector ring (35) mounted on the projection (12d) of the B-end shield merely supports the two contact connections which are spring-preloaded in the axial direction and connected to the brushes.

5. A universal electric motor according to one of claims 1 to 4, characterised in that connection reeds (33a, 33b) are guided out from the end face (32) of the B-end shield beyond the height of the connector ring (35) for connection to the power supply connections, in that these connection reeds pass through the end face of the B-end shield and, optionally with longitudinal bars (33a', 33b') guided inside the end face material of the B-end shield, terminate in axial plug contacts (33a", 33b") to be connected to electrical contact connections of the stator, and in that on the side of the end face of the B-end shield facing the stator, further plug contacts (34a, 34b) are provided which similarly pass through the end face material and, on the side facing the connector ring (35), optionally in the form of the switch-over contact rails (34a', 34b'), at least form the flat axial contacts (X, X'; Y, Y') for switching over the direction of rotation.

6. A universal electric motor according to claim 4, characterised in that the switch-over contact rails are inserted in the form of flat contact bars (34a', 34b') edgeways into the end face material of the B-end shield (12) and by being folded over form the flat axial contacts (X, X', Y', Y') for the selective further electrical connection to the brushes (I', II').

7. A universal electric motor according to claim 4, characterised in that the switch-over contact rails (34a", 34b") lie flat on the end face (32) of the B-end shield (12) and are held by short axial extensions (54) which penetrate into the material of the end shield (Fig. 16).

8. A universal electric motor according to claim 4, characterised in that the switch-over contact rails (34a", 34b") lie flat on the end face (32) of the B-end shield and are held by small material pins originating from the end face (32) which are themselves gripped on either side by resilient gripping parts (56) of the contact rails (Fig. 16).

9. A universal electric motor according to one of claims 1 to 8, characterised in that, on its side facing away from the end face (32) of the B-end shield, the connector ring (35) forms as one piece the carbon mountings (36) and optionally choke cups (44) to hold suppressor chokes (45) connected between the carbon brushes and the field winding connections.

10. A universal electric motor according to one of claims 1 to 9, characterised in that, to provide secure axial contacting between the contact surfaces (X, X', Y, Y') in the end face (32) of the B-end shield and the connection contacts routed onwards to the armature carbons, these contacts are spring-preloaded (bow) contacts (39) which are mounted in axially projecting hollow projections on the connector ring (35) in such a way that a flat contact piece (39a) is pressed axially onto the contacts (X, X'; Y, Y') formed in the end face of the B-end shield and on the other side axially outwards a plug contact reed (41) is formed for connection to the carbon brush connections or a suppressor choke connection.

11. A universal electric motor according to one of claims 1 to 10, characterised in that a further contact reed (43) adjoining the resilient bow contact (39) in the connector ring is provided, the extension thereof being guided underneath the choke cup (44) to the end of the suppressor choke (45) facing away therefrom and is there connected in such a way that merely by switching over the connection from the carbon brushes either to the further contact reed (43) or to the resilient bow contact (39), the suppressor choke (45) is connected into the circuit or the connection between the field windings and the carbon brushes is directly established (Fig. 7, Fig. 8).

12. A universal electric motor according to one of claims 1 to 11, characterised in that the connector ring (35) forms resilient, cut-out reeds (47) in the peripheral curve with a nose-shaped projection (48) directed at the end face of the B-end shield and in that detent recesses (50, 50', 50") are arranged in the B-end shield at preset angular intervals in such a way that in addition to the centre zero position of the connector ring which enables the electric motor to be switched on and off, the two electrical end positions for anticlockwise and clockwise rotation are established by detent engagement.

13. A universal electric motor according to one of claims 1 to 12, characterised in that a retaining ring (51) engaging over the connector ring (35) is provided to fix the connector ring (35) in position on the facing end face (32) of the B-end shield (12).

14. A universal electric motor according to claim 13, characterised in that the retaining ring (51) engages around the exterior annular rim of the connector ring (35) with an annular flange (51a) which projects inwardly, and so as to lock itself in place, engages in detent recesses (53) of the exterior wall of the B-end shield (12) by means of axial projections (51b) distributed over the periphery and comprising retaining catches (52) at the ends thereof.

## Revendications

1. Moteur électrique universel pour entraîner des dispositifs quelconques, notamment des outils électrique à main, machines de bureau, appareils électroménagers, appareils de jardinage motorisés et outils analogues, comprenant un stator et des enroulements de stator, un induit (20) rotatif, comprenant un collecteur (21), des panneaux de palier, de chaque côté, constituant en même temps les paliers pour l'induit (20) ainsi que des supports et des balais (charbons) montés sur une bague de commutation (35) de façon à pouvoir tourner d'un angle prédéterminé, et
dans les positions de fin de pivotement de la bague de commutation, les enroulements de champ du stator et l'enroulement de l'induit sont chaque fois polarisés de manière différente pour inverser le sens de rotation,
caractérisé en ce que
la bague de commutation (35) qui reçoit dans leurs supports (36) les balais (I', II') est engagée sur une surface annulaire frontale extérieure (32) du panneau de palier B, qui traverse la bague de commutation avec un épaulement (12d) formant le logement (29) du palier (28) de l'axe du rotor, et
• la surface frontale (32), annulaire, tournée axialement vers l'extérieur, du panneau de palier portant la bague de commutation (35), loge les branches ou rails de commutation (34a', 34b', 34a'', 34b'') servant à la commutation entre la marche à droite et la marche à gauche et le cas échéant la commutation entre la marche et l'arrêt, y compris les surfaces de contact (X, X', Y, Y') permettant un contact axial et se trouvant dans le plan de la bague frontale.

2. Moteur électrique universel selon la revendication 1,
caractérisé en ce que
• la surface frontale (32) porte directement la bague de commutation (35)
• les surfaces de contact (39') également axiales pour assurer la liaison électrique avec les branchements des balais.

3. Moteur électrique universel selon l'une des revendications 1 à 2,
caractérisé en ce que
• le panneau de palier B (12) forme le prolongement du logement de palier (29) pour le second palier à roulement (28) de l'axe (19) du rotor à partir d'une forme annulaire cylindrique/en pot, et,
• à la transition vers l'épaulement rétréci, la surface frontale extérieure (32) est formée dans le panneau de palier B traversé par des vis de serrage pour relier les deux panneaux de palier avec le paquet du stator (13), et dans lequel, les surfaces de contact (39a) également axiales, correspondantes, à plat, de la bague de commutation (35) portant les balais, comportent des contacts de commutation (X, X', Y, Y') à brancher.

4. Moteur électrique universel selon l'une des revendications 1 à 3,
caractérisé en ce que
• les branchements (33a', 33a'', 33b', 33a'') pour le réseau vers les enroulements de champ (I, II) ainsi que les branches ou rails de contact de commutation (33a', 34b', 34a", 34b") sont intégrés dans la surface frontale (32) du panneau de palier (B) ou traversent cette surface vers l'intérieur jusqu'aux branchements du paquet du stator, et
• la surface en regard de la bague de commutation (35) engagée sur l'épaulement (12d) du panneau de palier B loge uniquement les deux branchements de contact précontraints dans la direction axiale et reliés aux balais.

5. Moteur électrique universel selon l'une des revendications 1 à 4,
caractérisé en ce que
• des languettes de branchement (33a, 33b) sortent de la surface frontale (32) du panneau de palier B en débordant de la hauteur de la bague de commutation (35) pour assurer la liaison avec les branchements du réseau,
• ces languettes traversent la surface frontale du panneau de palier B et le cas échéant elles sont conduites avec les branchements longitudinaux (33a', 33b') à l'intérieur de la matière de la surface frontale du panneau de palier B, et communiquent avec les contacts d'enfichage (33a'', 33b"), de liaison axiale avec les branchements électriques du stator et,
• du côté de la surface frontale du panneau de palier B tourné vers le stator, d'autres contacts d'enfichage (34a, 34b) traversent également la matière de la surface frontale et forment sur le côté tourné vers la bague de commutation (35) également sous la forme de rails de contact de commutation (34a', 34b'), au moins les contacts axiaux en surface (X, X', Y, Y') pour l'inversion du sens de rotation.

6. Moteur électrique universel selon la revendication 4,
caractérisé en ce que
les rails de contact d'inversion sont logés sous forme de branches de contact, plates (34a', 34b'), sur champ, dans la matière de la surface frontale du panneau de palier B (12) et forment par cintrage, les contacts axiaux plats (X, X', Y, Y') pour permettre une liaison électrique sélective avec les balais (I', II').

7. Moteur électrique universel selon la revendication 4,
caractérisé en ce que
les rails de contact d'inversion (34a", 34b") sont appliqués à plat sur la surface frontale (32) du panneau de palier B (12) et ils sont maintenus par des prolongements axiaux courts (54) pénétrant dans la matière du panneau de palier (figure 16).

8. Moteur électrique universel selon la revendication 4,
caractérisé en ce que
les rails de contact d'inversion (34a", 34b") sont appliqués à plat sur la surface frontale (32) du panneau de palier B et sont maintenus par de petits tétons réalisés dans la matière de la surface frontale (32), qui sont eux-mêmes pris des deux côtés par des pièces de serrage électrique (56) des rails de contact (figure 16).

9. Moteur électrique universel selon l'une des revendications 1 à 8,
caractérisé en ce que
la bague de commutation (35) est réalisée en une seule pièce avec sur son côté opposé à la surface frontale (32) du panneau de palier B, les supports de balai (36) et le cas échéant le pot d'étranglement (44) pour recevoir les bobines de déparasitage (45) branchés entre les balais et les branchements d'enroulement de champ.

10. Moteur électrique universel selon l'une des revendications 1 à 9,
caractérisé en ce que
pour garantir le contact axial entre les surfaces de contact (X, X', Y, Y') de la surface frontale (32) du panneau de palier B et les contacts de transmission vers les balais d'induit, ceux-ci sont réalisés sous forme de contacts (39) (étrier en forme de U) à précontrainte pour ressort, montés sur la bague de commutation (35) dans des saillies creuses, débordantes axialement, pour qu'une pièce de contact de surface (39a) soit pressée axialement contre les contacts (X, X', Y, Y') formés dans la surface frontale du panneau de palier B et de l'autre côté, axialement vers l'extérieur, une languette de contact d'enfichage (41) assure la liaison avec les branchements des balais ou un branchement de la bobine de déparasitage.

11. Moteur électrique universel selon l'une des revendications 1 à 10,
caractérisé en ce que
d'une manière adjacente au contact d'étrier en forme de U (39), élastique, la bague de commutation comporte une autre languette de contact (43) dont le prolongement passe en dessous du pot (44) pour aller vers le côté opposé de la bobine de déparasitage (45) et qui est branchée pour qu'un simple changement de branchement des balais est réalisé soit directement avec les autres languettes de contact (44), soit avec le contact en étrier en forme U élastique (39), la bobine de déparasitage (45) est reliée au circuit électrique entre la liaison et les enroulements de champ et les balais (figures 7, 8).

12. Moteur électrique universel selon l'une des revendications 1 à 11,
caractérisé en ce que
la bague de commutation (35) est formée dans son tracé périphérique, de manière élastique avec des languettes découpées (47), et une partie en saillie (48) en forme de bec dirigé vers la surface frontale du panneau de palier B et dans ce panneau de palier B, à des intervalles angulaires prédéterminés, il y a des découpes d'encliquetage (50, 50', 50") de façon qu'en plus de la position zéro, médiane permise par la coupure/branchement du moteur électrique, pour la bague de commutation, les deux positions de fin de course électriques pour la marche à gauche et la marche à droite soient fixées par des moyens d'encliquetage.

13. Moteur électrique universel selon l'une des revendications 1 à 12,
caractérisé en ce qu'
une bague de fixation (51) qui passe sur la bague de commutation (35) fixe la bague de commutation (35), sur la surface frontale (32) en regard du panneau de palier B, (12).

14. Moteur électrique universel selon la revendication 13,
caractérisé en ce que
la bague de fixation (51) entoure par une bride annulaire en saillie vers l'intérieur (51a), l'arête de la bague extérieure de la bague de commutation (35) et pénètre elle-même par des saillies axiales (51b) réparties à la périphérie et des becs de blocage (52), prévus d'un côté, dans des cavités d'encliquetage (53) de la paroi extérieure du panneau de palier B (12) pour assurer le verrouillage.
